## Europäisches Patentamt
## European Patent Office
## Office européen des brevets

(19)

(11) Veröffentlichungsnummer : **0 190 170**
**B1**

(12) **EUROPÄISCHE PATENTSCHRIFT**

(45) Veröffentlichungstag der Patentschrift :
**28.09.88**

(21) Anmeldenummer : **85903205.4**

(22) Anmeldetag : **19.07.85**

(86) Internationale Anmeldenummer :
**PCT/CH 85/00117**

(87) Internationale Veröffentlichungsnummer :
**WO/8600857 (13.02.86 Gazette 86/04)**

(51) Int. Cl.⁴ : **B 60 N   1/08**

(54) VORRICHTUNG ZUR LAGERUNG EINES VERSCHIEBBAREN SITZES IN EINEM FAHRZEUG.

(30) Priorität : **26.07.84 DE 8422275 U**

(43) Veröffentlichungstag der Anmeldung :
**13.08.86 Patentblatt 86/33**

(45) Bekanntmachung des Hinweises auf die Patenterteilung : **28.09.88 Patentblatt 88/39**

(84) Benannte Vertragsstaaten :
**BE DE FR GB IT NL SE**

(56) Entgegenhaltungen :
**EP-A- 0 067 123**
**EP-A- 0 076 041**
**DE-A- 3 030 725**
**FR-A- 2 282 349**
**FR-A- 2 310 239**
**FR-A- 2 352 684**
**FR-A- 2 385 928**
**FR-A- 2 415 555**

(73) Patentinhaber : **Schweizerische Aluminium AG**
**CH-8212 Neuhausen am Rheinfall (CH)**

(72) Erfinder : **FRANK, Simon**
**Alterpostweg 4**
**D-7708 Watterdingen (DE)**

(74) Vertreter : **Hiebsch, Gerhard F., Dipl.-Ing.**
**Postfach 464**
**D-7700 Singen 1 (DE)**

## Beschreibung

Die Erfindung betrifft eine Vorrichtung zur Lagerung eines verschiebbaren Sitzes in einem Fahrzeug mittels in ortsfesten Führungsschienen an zwischengeordneten Rollkörpern in Schienenlängsrichtung bewegbaren Gleitschienen, deren Lage durch eine Arretiereinrichtung mit an wenigstens einer der Führungsschienen vorgesehener Raste festlegbar ist, wobei die Führungsschiene als rinnenförmiger Schienenkörper mit einem einen Aufnahmeraum für die Gleitschiene begrenzenden Boden und zwei Schenkelwänden ausgebildet ist und eine in Einbaulage nach oben gerichtete Oeffnung aufweist.

Eine solche Vorrichtung ist aus der EP-A-0 076 041 bekannt.

Bei dieser bekannten Gleitführung für einen Fahrzeugsitz ist die Führungsschiene von U-förmiger Gestalt mit nach innen gebogenen U-Schenkeln, die einen Durchtritt für die Gleitschiene lassen, die den verstellbaren Fahrzeugsitz trägt. Zwischen den nach innen gebogenen U-Schenkeln der Führungsschiene und nach oben zurückgebogenen Ansätzen der Gleitschiene sind Rollkörper angeordnet ; ebenso sind weitere Rollkörper zwischen dem Boden der Gleitschiene und dem Boden der Führungsschiene zwischengelagert.

Die Führungsschiene wird auf dem Fahrzeugboden mittels Halterohren befestigt, die jeweils an den Enden der Führungsschiene angeordnet sind. Durch diese mehr oder minder punktartige Befestigung der Führungsschiene am Fahrzeugboden ergeben sich große Biegemomente, insbesondere wenn bei einem ruckartigen Auffahrunfall auf den Fahrzeugsitz große Kräfte wirken.

Angesichts dieser Gegebenheiten hat sich der Erfinder das Ziel gesetzt, eine sichere und einfachere bzw. günstigere Befestigung der Führungs- und Gleitschiene im Tunnel des Fahrzeuges zu schaffen.

Zur Lösung dieser Aufgabe führt, daß die Außenseite der ersten Schenkelwand mit der Außenseite des Bodens und einem Befestigungssteg eine im wesentlichen geschlossene, stufenförmige Anlagefläche zum Anbau an einen entsprechend geformten Fahrzeugtunnel bildet, wobei der Befestigungssteg im wesentlichen parallel zur ersten Schenkelwand und als Fortsetzung der zweiten Schenkelwand unterhalb des Bodens verläuft.

Besondere Weiterbildungen der Erfindung sind in den Unteransprüchen gekennzeichnet.

Die Erfindung wird in der nachfolgenden Beschreibung bevorzugter Ausführungsbeispiele sowie anhand der Zeichnung näher erläutert ; diese zeigt in

Fig. 1 : eine schematische Seitenansicht eines Fahrgastsitzes auf einer Schienenführung mit skizzenhaft angedeutetem Fahrgast ;

Fig. 2 : den vergrößerten Querschnitt durch die Schienenführung nach Linie II-II in Fig. 1 ;

Fig. 3 : eine vergrößerte und teilweise geschnittene Seitenansicht der Schienenführung mit Arretierung ;

Fig. 4 : einen vergrößerten Ausschnitt aus Fig. 3 ;

Fig. 5 : einen vergrößerten Ausschnitt aus Fig. 4 nach deren Feld VI ;

Fig. 6 : die Rückenansicht eines Rastzahnes der Arretierung ;

Fig. 7 : den Schnitt durch Fig. 6 nach deren Linie VIII-VIII ;

Fig. 8 : eine Schrägsicht auf eine andere Schienenführung mit Arretierung ;

Fig. 9 : einen vergrößerten Teillängsschnitt durch Fig. 8 nach deren Linie X-X ;

Fig. 10 : einen vergrößerten Ausschnitt aus Fig. 9.

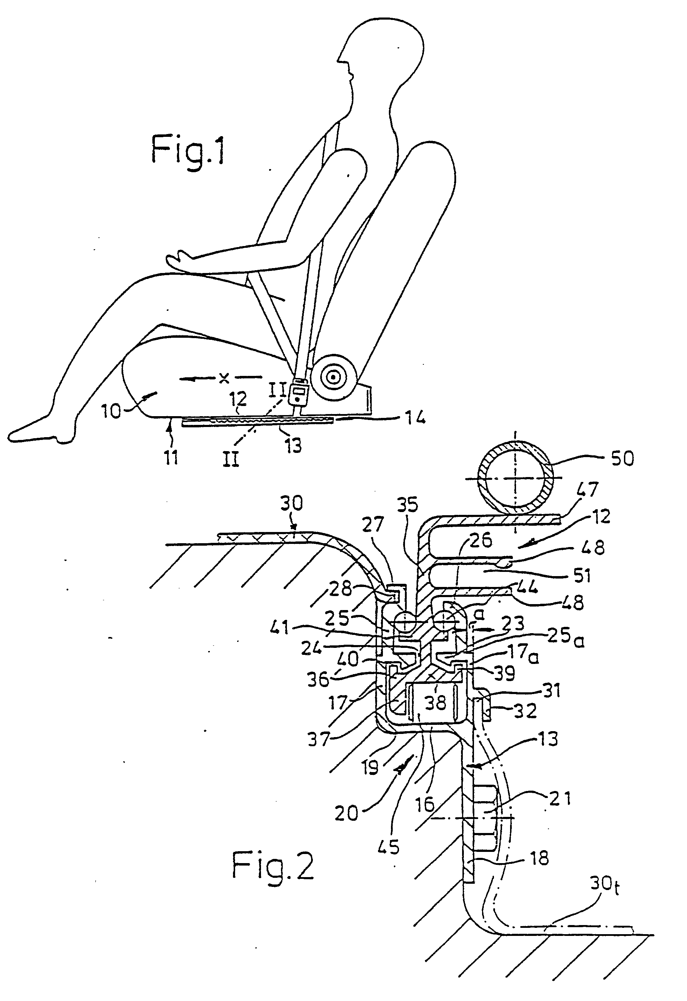

Ein Fahrgastsitz 10 eines in der Zeichnung nicht wiedergegebenen Kraftfahrzeuges ist auf seiner Unterseite 11 mit zwei Gleitschienen 12 versehen, die fahrzeugseitig festliegenden Führungsschienen 13 zugeordnet und darin aus einer in Fig. 1 gezeigten Endlage in Pfeilrichtung x verschieblich sind. Jede der Gleitschienen 12 bildet mit ihrer Führungsschiene 13 eine Schienenführung 14 für den Fahrgastsitz 10.

Die Führungsschiene 13 ist gemäß Fig. 2 als U-förmiger Schienenkörper aus Boden 16 und Schenkelwänden 17, 17a ausgebildet, wobei sich eine der Schenkelwände — 17$_a$ — unterhalb des Bodens 16 als Befestigungssteg 18 fortsetzt. Der Boden 16 ruht auf einem schulterartigen Absatz 19 eines Fahrzeugtunnels 20, an dem der Befestigungssteg 18 mit Schrauben 21 festgelegt ist.

An die Schenkelwände 17, 17a sind zueinanderweisende Hakenleisten 23 etwa rechtwinklig angeformt, die einen mittigen Führungsschlitz 24 begrenzen und von denen — zur jeweiligen Schenkelwand 17, 17a zum Führungsschlitz 24 hin um ein Maß a seitenversetzt — Seitenleisten 25, 25$_a$ mit einwärts gekrümmter Kante 26 aufragen. An die dem Fahrzeugtunnel 20 nahe — vom Befestigungssteg 18 ferne — Seitenleiste 25 ist noch ein Ansatz 27 mit äußerer Seitennut 28 angeformt, in welcher eine Längskante eines Teppichs 30 sitzt. Zur Lagerung der Längskante eines Bodenteppichs 30$_t$ ragt von der äußeren Schenkelwand 17$_a$ der Führungsschiene 13 ein Winkelprofil 32 mit bodenwärtiger Nut 31 ab.

Die Gleitschiene 12 ist — wie auch die Führungsschiene 13 — ein stranggepreßtes Aluminiumprofil aus einem im Führungsschlitz 24 der Führungsschiene 13 laufenden Mittelsteg 35, an den endwärts ein liegendes L-Profil 36 angeformt ist, dessen kurzer Schenkel 37 der Innenseite der einen Schenkelwand 17 benachbart ist und von dessen horizontalem langem Schenkel 38 zwei Nasenstege 39 in Nuten 40 der Hakenleisten 23 ragen.

Oberhalb der Hakenleisten 23 sind beidseits des Mittelsteges 35 aus diesem Lagerleisten 41 herausgeformt, deren gekehlte Uebergänge zum Mittelsteg 35 mit den gegenüberstehenden Innenflächen der gekrümmten Kanten 26 Führungen für Rollkörper 44 bilden. Ebenfalls ruht der lange Schenkel 38 des L-Profils 36 auf Rollen 45, die auf dem Boden 16 der Führungsschiene 13 abrollen.

Der Mittelsteg 35 überragt die Seitenleisten 25 der Führungsschiene 13 und ist unter Bildung einer Tragleiste 47 für ein bei 50 angedeutetes Sitzgestell abgewinkelt. Unterhalb der Tragleiste 47 bilden zwei zu dieser in Abstand verlaufende, ebenfalls am Mittelsteg 35 angeformte Rippen 48 ein Schubfach 51.

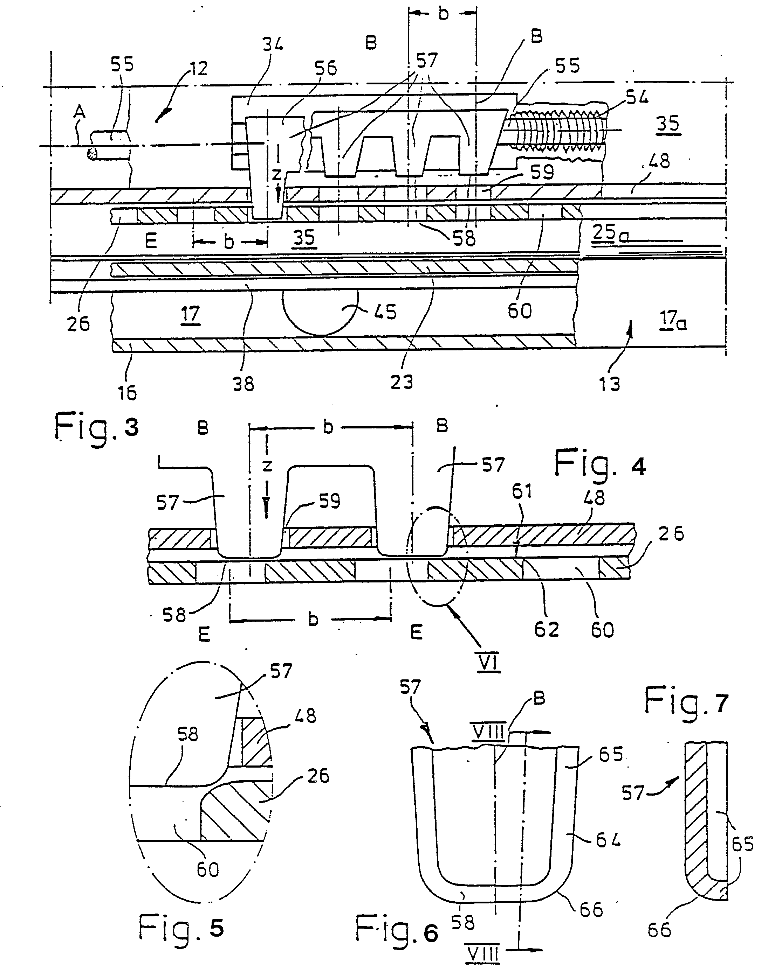

Die Arretierung der Schienenführung 14 erfolgt gemäß Fig. 3 mittels eines um seine Längsachse A gegen die Kraft einer Schraubenfeder 54 begrenzt drehbaren Stabes 55, der an der Gleitschiene 12 festliegt und von dem radial eine Platte 56 aus Stahl mit — im gewählten Ausführungsbeispiel vier — Rastzähnen 57 durch ein Fenster 34 des Mittelsteges 35 ragt. Unterhalb der Zahnfrontkanten 58 ist in einer Rippe 48 jedem Rastzahn 57 ein Durchbruch 59 zugeordnet ; die Durchbruchachsen B verlaufen in einem Abstand b von z. B. 16 mm voneinander.

Unterhalb der Rippe 48 läuft die gekrümmte Kante 26 der Führungsschiene 13, in der ebenfalls Ausnehmungen 60 mit mittleren Abständen b ihrer Achse E zu erkennen sind ; diese Ausnehmung 60 sind über die gesamte Schienenlänge angeordnet.

Die vier mit den Durchbrüchen 59 der Gleitschiene 12 jeweils fluchtenden Ausnehmungen 60 der Führungsschiene 13 nehmen die Rastzähne 57 auf, wie dies in Fig. 3 beim linken Rastzahn 57 angedeutet ist. Durch Drehen des Stabes 55 gegen die Kraft (Pfeil Z) der Schraubenfeder 54 können die Rastzähne 57 zumindest aus den Ausnehmungen 60 gehoben werden, wodurch die Arretierung aufgehoben ist.

Bevor gemäß Fig. 4 die Zahnfrontkante 58 in die Ausnehmung 60 gleitet, rutscht sie auf der Oberfläche 61 der Kante 26 entlang und verformt den Rand 62 der Ausnehmung 60 dann in der in Fig. 5 angedeuteten Weise, wenn die Zahnfrontkante 58 und die Zahnseitenkante 64 mit Stanzriefen versehen sind.

In Fig. 6, 7 ist ein Rastzahn 57 mit gekrümmtem Rand zu erkennen ; an der Zahnfrontkante 58 und den Zahnseitenkanten 64 sind eingezogene Ränder 65 zu erkennen, die als Gleitflächen glatte Krümmungsbereiche 66 aus Walzhaut anbieten.

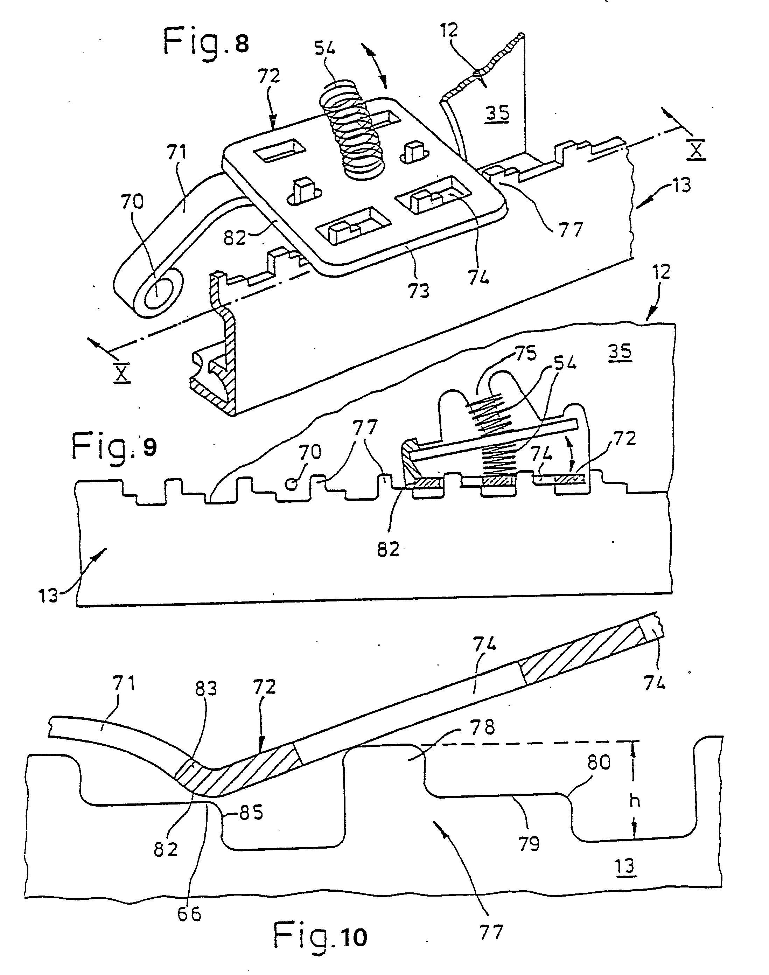

Eine andere Arretiereinrichtung zeigen die Fig. 8 bis 10 ; am Mittelsteg 35 der Gleitschiene 12 ist mittels eines von einem Gelenkbolzen 70 durchsetzten Armes 71 eine Arretierplatte 72 aus Stahl mit nahe ihrer Seitenkanten 73 vorgesehenen Schlitzen 74 angelenkt und gegen eine bei 75 im Mittelsteg 35 festgelegte Feder 54 anhebbar, um in Raststellung in die Schlitze 74 eingreifende Zähne 77 der aus einem Aluminiumpreßprofil gefertigten Führungsschiene 13 freizugeben ; nunmehr kann die Gleitschiene 12 verschoben werden.

Die Zähne 77 der Führungsschiene 13 sind neben ihrer Zahnspitze 78 (Fig. 10) mit einer etwa in halber Zahnhöhe h verlaufenden Stufe 79 versehen, an deren Kante 80 die Rückenkante 82 der Arretierplatte 72 in die Raststellung nach Fig. 8 gleitet. Die Arretierplatte 72 ist ohne Störung ihrer Walzhaut unter Bildung einer Krümmungsfläche zu einem Rand 83 gebogen, um den bereits beschriebenen Abriebvorgang — hier an der Zahnflanke 85 — zu unterbinden.

## Patentansprüche

1. Vorrichtung zur Lagerung eines verschiebbaren Sitzes (10) in einem Fahrzeug mittels in ortsfesten Führungsschienen (13) an zwischengeordneten Rollkörpern (44, 45) in Schienenlängsrichtung bewegbaren Gleitschienen (12), deren Lage durch eine Arretiereinrichtung mit an wenigstens einer der Führungsschienen vorgesehener Raste festlegbar ist, wobei die Führungsschiene (13) als rinnenförmiger Schienenkörper mit einem einen Aufnahmeraum für die Gleitschiene (12) begrenzenden Boden (16) und zwei Schenkelwänden (17, 17$_a$) ausgebildet ist und eine in Einbaulage nach oben gerichtete Oeffnung aufweist, dadurch gekennzeichnet, daß die Außenseite der ersten Schenkelwand (17) mit der Außenseite des Bodens (16) und einem Befestigungssteg (18) eine im wesentlichen geschlossene, stufenförmige Anlagefläche zum Anbau an einen entsprechend geformten Fahrzeugtunnel (20) bildet, wobei der Befestigungssteg (18) im wesentlichen parallel zur ersten Schenkelwand (17) und als Fortsetzung der zweiten Schenkelwand (17$_a$) unterhalb des Bodens (16) verläuft.

2. Vorrichtung nach Anspruch 1, dadurch gekennzeichnet, daß an einen Mittelsteg (35) der Gleitschiene (12) endwärts im Aufnahmeraum ein liegendes L-Profil (36) angeformt ist, dessen kurzer Schenkel (37) der Innenseite der ersten Schenkelwand (17) benachbart ist und von dessen horizontalem langem Schenkel (38) Nasenstege (39) abragen, die in Hakenleisten (23) der Führungsschiene (13) einragen, wobei der lange Schenkel (38) des L-Profils (36) auf Rollkörpern (45) ruht, die auf dem Boden der Führungsschiene (13) abrollen.

3. Vorrichtung nach Anspruch 2, dadurch gekennzeichnet, daß parallel zu den Schenkelwänden (17, 17$_a$) an die Hakenleisten (23) querschnittlich nach innen versetzt Seitenleisten (25, 25$_a$) mit einwärts gekrümmten Kanten (26) angeformt sind und mit beidseits des Mittelsteges (35) der Gleitschiene (12) herausgeformten Lagerleisten (41) Führungen für weitere Rollkörper (44) bilden.

4. Vorrichtung nach einem der Ansprüche 1 bis 3, dadurch gekennzeichnet, daß an die erste Schenkelwand (17) der Führungsschiene (13) ein Ansatz (27) so angeformt ist, daß er eine nach außen gerichtete Seitennut (28) begrenzt.

5. Vorrichtung nach einem der Ansprüche 1 bis 4, dadurch gekennzeichnet, daß von der zweiten Schenkelwand (17$_a$) der Führungsschiene (13) ein nach außen gerichtetes Winkelprofil (32) abragt, das mit der zweiten Schenkelwand (17$_a$)

eine bodenwärts gerichtete Nut (31) begrenzt.

6. Vorrichtung nach wenigstens einem der Ansprüche 2 bis 5, dadurch gekennzeichnet, daß der Mittelsteg (35) der Gleitschiene (12) unter Bildung einer Tragleiste (47) für den Sitz (10) abgewinkelt ist.

7. Vorrichtung nach Anspruch 6, dadurch gekennzeichnet, daß parallel zur Tragleiste (47) und zu dieser in Abstand vom Mittelsteg (35) zwei angeformte Rippen (48) abragen, die ein Schubfach (51) begrenzen.

## Claims

1. Device for supporting a sliding seat (10) in a vehicle by means of slide rails (12) movable in stationary guide rails (13) in the longitudinal direction of the rails on interposed roller elements (44, 45), the position of which is lockable by a clamping device having a catch provided on at least one of the guide rails, whilst the guide rail (13) is constructed as a channel-shaped rail element having a base (16) delimiting a reception space for the slide rail (12) and two member walls (17, $17_a$) and exhibits an aperture directed upwards in the installed position, characterized in that the outside of the first member wall (17) forms with the outside of the base (16) and with a fastening web (18) a substantially closed step-shaped abutment surface for attachment to a correspondingly shaped vehicle tunnel (20), whilst the fastening web (18) extends substantially parallel to the first member wall (17) and in prolongation of the second member wall ($17_a$) beneath the base (16).

2. Device according to Claim 1, characterized in that a recumbent L-shaped profile (36) is shaped in the reception space terminally on a central web (35) of the slide rail (12), that its short member (37) is adjacent to the inside of the first member wall (17) and nose webs (39) project from its horizontal long member (38), which project into hook bars (23) of the guide rail (13), whilst the long member (38) of the L-shaped profile (36) rests upon roller elements (45) which roll on the base of the guide rail (13).

3. Device according to Claim 2, characterized in that cross-sectionally inwardly offset side bars (25, $25_a$) having inwardly curved edges (26) are shaped on the hook bars (23) parallel to the member walls (17, $17_a$) and form guide means for further roller elements (44) with bearing bars (41) shaped out on both sides of the central web (35) of the slide rail (12).

4. Device according to any of Claims 1 to 3, characterized in that a projection (27) is shaped onto the first member wall (17) of the guide rail (13) so that it delimits an outwardly directed side groove (28).

5. Device according to any of Claims 1 to 4, characterized in that an outwardly directed angle profile (32), which projects from the second member wall ($17_a$) of the guide rail (13), delimits with the second member wall ($17_a$) a groove (31)

directed towards the base.

6. Device according to one or more of Claims 2 to 5, characterized in that the central web (35) of the slide rail (12) is angled so as to form a support bar (47) for the seat (10).

7. Device according to Claim 6, characterized in that two shaped fins (48), which project parallel to the support bar (47) and to the latter at an interval from the central web (35), delimit a drawer (51).

## Revendications

1. Dispositif pour supporter un siège coulissant (10) dans un véhicule au moyen de rails de glissement (12) mobiles longitudinalement sur des corps roulants interposés (44, 45), dans des rails de guidage fixes, la position de ces rails de glissement étant fixée par un dispositif arrêtoir avec crantage prévu sur au moins l'un des rails de guidage, le rail de guidage (13) étant réalisé en tant que corps-rail en forme de rigole comportant un fond (16) qui borde l'espace de réception destiné à recevoir le rail de glissement (12) et comportant deux parois-ailes (17, 17a), et présentant une ouverture qui, en position de montage, est tournée vers le haut, caractérisé par le fait que le côté extérieur de la première paroi-aile (17) forme, avec le côté extérieur du fond (16) et avec une âme de fixation (18), une surface d'appui en forme de gradin, sensiblement continue, apte au montage sur un tunnel de forme correspondante (20) d'un véhicule, l'âme de fixation (18) s'étendant sensiblement parallèlement à la première paroi-aile (17) et passant en dessous du fond (16), en tant que prolongement de la deuxième paroi-aile (17a).

2. Dispositif selon la revendication 1, caractérisé par le fait qu'un profilé en forme de L couché (36), formé sur l'extrémité de l'âme médiane (35) du rail de glissement (12), est situé dans l'espace de réception, la branche courte (37) de ce profilé étant voisine du côté intérieur de la première paroi-aile (17) et sa branche longue horizontale (38) présentant en saillie des nervures formant bec (39) qui s'engagent dans des nervures à profil en crochet (23) du rail de guidage (13), la grande branche (38) du profilé en L (36) reposant sur des corps roulants (45) qui roulent sur le fond du rail de guidage (13).

3. Dispositif selon la revendication 2, caractérisé par le fait que des ailes latérales (25, 25a) avec des bords (26) courbés vers l'intérieur sont formées parallèlement aux parois-ailes (17, 17a), sur les nervures à profil en crochet (23), en étant, vues en coupe transversale, décalées vers l'intérieur, ces ailes latérales formant, avec des nervures-paliers (41) formées en saillie des deux côtés de l'âme médiane (35) du rail de glissement (12), des guides pour d'autres corps roulants (44).

4. Dispositif selon l'une des revendications 1 à 3, caractérisé par le fait qu'un saillant (27) est formé sur la première paroi-aile (17) du rail de guidage (13), de façon à délimiter une rainure latérale (28) dirigée vers l'extérieur.

5. Dispositif selon l'une des revendications 1 à 4, caractérisé par le fait qu'un profil en cornière (32) dirigé vers l'extérieur, délimitant, avec la deuxième paroi-aile (17a), une rainure (31) dirigée vers le plancher, déborde en saillie sur la deuxième paroi-aile (17a) du rail de guidage (13).

6. Dispositif selon au moins l'une des revendications 2 à 5, caractérisé par le fait que l'âme médiane (35) du rail de glissement (12) est coudée en formant une aile porteuse (47) pour le siège (10).

7. Dispositif selon la revendication 6, caractérisé par le fait que deux nervures (48) qui délimitent un tiroir (51) sont formées en saillie sur l'aile médiane (35) en étant parallèles à l'aile porteuse (47) dont elles sont espacées.

Fig.1

Fig.2

**Fig. 3**

**Fig. 4**

**Fig. 5**

**Fig. 6**

**Fig. 7**

Fig.8

Fig.9

Fig.10